# EUROPEAN PATENT SPECIFICATION

(11) **EP 0 381 770 B1**
(45) Date of publication and mention of the grant of the patent: **26.01.1994**
(21) Application number: 89908274.7
(22) Date of filing: 05.07.1989
(51) Int. Cl.: B29C 33/22, B29C 45/66, B22D 17/26

(54) **TWO-PLATEN TYPE MOLD CLAMPER**
FORMSCHLIESSVORRICHTUNG VOM TYP MIT ZWEI PLATTEN
PRESSE SERRE-MOULE DU TYPE A DEUX PLATEAUX

(30) Priority: 08.07.1988 JP 169118/88
(43) Date of publication of application: 16.08.1990
(73) Proprietor: FANUC LTD., Minamitsuru-gun, Yamanashi 401-05 (JP)
(72) Inventor: INABA, Yoshiharu, Kanagawa 214 (JP); NAITO, Hideo, Tokyo 191 (JP); WATANABE, Kikuo,Room 7-209, Fanuc Manshonharimomi, Yamanashi 401-05 (JP)
(74) Representative: Billington, Lawrence Emlyn
(86) International application number: JP8900679
(87) International publication number: WO9000467

(56) References cited:
- EP-A- 0 213 211
- WO-A-88/09256
- JP-U-60 191 416
- JP-Y- 5 528 383
- US-A- 3 104 433
- US-A- 4 172 872
- PATENT ABSTRACTS OF JAPAN, vol. 11, no. 263 (M-619)[2710], 26th August 1987; & JP-A-62 066 916 (TOSHIBA MACH. CO., LTD) 26-03-1987
- PATENT ABSTRACTS OF JAPAN, vol. 14, no. 113 (M-944)[4056], 2nd March 1990;& JP-A-1 314 128 (YAZAKI KAKO K.K.) 19-12-1989

## Description

The present invention provides a two-platen mold-clamping apparatus for use in a molding machine such as an injection molding machine and a press machine.

In general, a three-platen type mold-clamping apparatus, having stationary, movable and rear platens, has been employed in a molding machine such as an injection molding machine. The mold-clamping apparatus of this kind is so designed as to reciprocate, by means of a toggle mechanism, a crank mechanism or a ball-screw/ball-nut mechanism, the movable platen along a plurality of tie bars between the stationary platen and the rear platen connected with each other by the tie bars, for mold-opening, mold-closing and mold-clamping operations. Further, the mold-clamping apparatus is so arranged as to cause the tie bars to be elongated, during the mold-clamping operation, for generating a mold clamping force, and support respective one ends of the tie bars by the rear platen to maintain a parallel relation established between the stationary and movable platens unchanged. In this manner, the aforementioned conventional three-platen type mold-clamping apparatus inevitably requires the plurality of tie bars and the rear platen. However, these components are expensive, resulting in a difficulty in production of a mold-clamping apparatus which is low-priced and free from complicated maintenance.

JP-A-55-28383 discloses a two-platen mold-clamping apparatus according to the preamble of the attached claim 1. However, the mold-clamping force generated thereby is not great, and the movable platen is supported and guided only by the ball screws.

According to the present invention there is provided a two-platen mold-clamping apparatus comprising:
a stationary platen;
a movable platen disposed for reciprocal motion relative to said stationary platen;
a plurality of ball nuts mounted on the movable platen and each disposed to be rotatable relative to said movable platen but axially immovable relative thereto;
a plurality of ball screws each threadedly engaged with a corresponding one of said plurality of ball nuts and each having one end portion fixed to said stationary platen; and
at least one motor having an output shaft and mounted on said movable platen;
characterised by:
means for operatively coupling said output shaft of said at least one motor to said plurality of the ball nuts, whereby said plurality of ball screws are caused to be elongated, during a mold-clamping operation, so as to generate a mold-clamping force; and
a frame upon which is fixed the stationary platen and a rail extending parallel to the ball screws, the movable platen being slidably engaged with the rail in a manner such that it is prevented from being disengaged from the rail.

An embodiment of the present invention requires neither a rear platen nor the tie bars of the conventional three-platen type mold-clamping apparatus. Compared with the conventional apparatus, an embodiment of the present invention requires a reduced number of structural parts, and is accordingly easy to maintain and is low in price. Moreover, since mold-clamping force is generated by elongation of the ball screws, the clamping force can be improved, with the rail fixed on the frame providing a secure guiding for the moveable platen.

Further features of the invention are defined in the dependent claims.

For a better understanding of the present invention and to show how it may be put into effect reference will now be made, by way of example to the exemplary embodiment shown in the accompanying drawings wherein:
Fig. 1 is a front view, partly in cross section, showing a two-platen mold clamping apparatus according to an embodiment of the present invention; and
Fig. 2 is a schematic side view showing a power transmission mechanism which connects ball screws with a motor output shaft shown in Fig. 1.

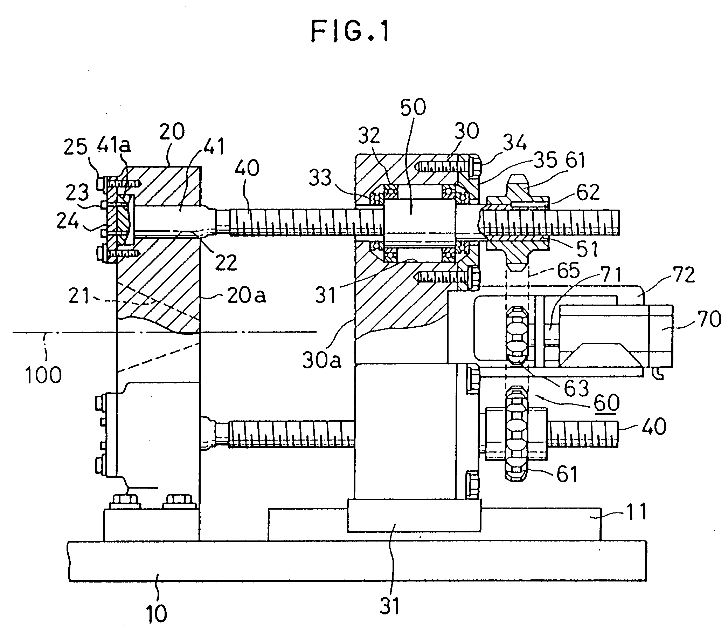

Referring to Fig. 1, a two-platen type mold-clamping apparatus, mounted on an injection molding machine, for instance, is of a small-capacity type producing a mold-clamping force on the order of 30 tons. The mold-clamping apparatus comprises a stationary platen 20 fixed on a frame 10 of the injection molding machine, and a movable platen 30. These platens 20, 30 are disposed so that a parallel relation is established between their opposite end surfaces, and are mounted with mold halves (not shown), respectively. The movable platen 30 is provided with a leg portion 31 for smooth reciprocal motion relative to the stationary platen 20 along a rail 11 provided on an upper face of the frame 10, the leg portion 31 having support rollers and/or a guide member (none of which is illustrated), and slidably engaged with the rail 11 in a manner prevented from being disengaged from the rail.

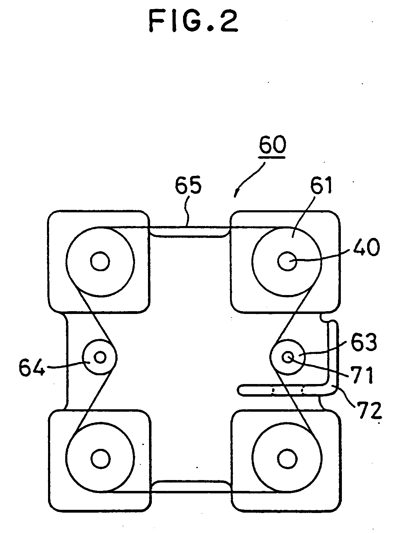

As shown in Figs. 1 and 2, the mold-clamping apparatus is further provided with four ball screws 40 respectively extending in parallel with an axis 100, which extends in parallel with the upper face of the frame 10 and passes through a nozzle hole 21 which is formed in the stationary platen 20 in alignment with the center of each of mold-mounting-faces 20a, 30a of the platens 20, 30. Preferably, the four ball screws 40 are disposed at equal angular intervals around the axis 100 in the circumferential direction, and are respectively spaced from the axis 100 by the same distance. Each of the ball screws 40 has one end portion, which consists of a step shaft, and is fitted in a corresponding one of stepped holes 22 formed in peripheral end portions of the stationary platen 20. Each ball screw 40 is fixed to the stationary plate 20 through a cap plate 24, which is fixed to an outer end face of a large-diameter portion 41a by screws 23 and is also fixed to an outer end face of the stationary platen 20 by bolts 25, with an inner end face of the large-diameter portion 41a disposed in contact with an end face of that portion of the stationary platen 20 which is formed with the stepped hole. That is, the ball screws 40 are arranged to be axially immovable and unrotatable relative to the stationary platen 20.

Ball nuts (one of which is shown by reference numeral 50), each threadedly engaged with a corresponding one of the ball screws 40, are respectively received in four stepped holes (one of which is indicated by reference numeral 31) formed in that portions of the movable platen 30 through which the ball screws extend. Each of the ball nuts 50 is supported to be rotatable relative to the movable platen 30 but axially immovable relative thereto, by means of radial bearings 32 and thrust bearings 33 which are respectively disposed in contact with an inner end face of that portion of the movable platen 30 through which the ball screw extends, and with an inner end face of a cap member 35 fixed to an outer end face of the movable platen 30 by bolts 34.

Integrally formed with each of the ball nut 50 is a sleeve 51 which is fitted on the ball screw 40 and projects outwardly of the movable platen 30 in the direction away from the stationary platen 20. A sprocket 61, which forms part of power transmission mechanism 60, is mounted on the projecting portion of the sleeve 51 for rotation in unison therewith by means of a mounting member 62 which is comprised of a key member or a coupling member (none of which is shown) for a variable adjustment of a phase relation between a rotational position of each ball nut 50 and that of an output shaft 71 of a mold-clamping motor 70. The coupling member comprises two annular members which are wedge-shape in cross section and disposed between opposite circumferential faces of the sleeve 51 and the sprocket 61, and a clamping member for causing the annular members to be urged contact with each other. The coupling member is arranged to couple the sleeve 51 and the sprocket 61 for integral rotation through the two annular members when each of these annular members is brought in urged contact with the other member and with a corresponding one of the sleeve 51 and the sprocket 61. Also, the coupling member is so arranged that these annular members are out of contact from each other for alteration of the rotational phase relation between the ball nuts 50 and the motor output shaft 71.

The mold-clamping motor 70 is fixed to an outer end face of the movable platen 30 through a support member 72, and is disposed in such a direction that the output shaft 71 thereof is located close to the movable platen 30 so as to reduce a flexure of the ball screws 40 and the like. Further, the motor, 70 is connected to a control unit (not shown) of the injection molding machine. Affixed to the motor output shaft 71 is a sprocket 63 which is disposed in alignment with four sprockets 61 in the axial direction of the mold-clamping apparatus. Further, a sprocket 64 is disposed in alignment with the sprocket 63 in the vertical direction of the apparatus and with the sprockets 61, 63 in the axial direction thereof, and a chain 65 is stretched between these sprockets 61, 63 and 64, as shown in Fig. 2. As a consequence, the output shaft 71 of the mold-clamping motor 70 is operatively connected to each of the ball nuts 50 through the power transmission mechanism 60 comprised of the aforesaid elements 61 - 65. Meanwhile, the sprocket 64 is coupled to a brake unit (not shown) which is actuated under the control of the control unit upon completion of mold-clamping operation, for the sake of reducing a load applied to the motor 70 during the mold-clamping operation. Furthermore, the mold-clamping apparatus is provided with a pressure detector (not shown) for detecting a predetermined mold-clamping force being reached. For instance, the detector is comprised of a strain detector having a strain gauge mounted on the ball screw 40 and operable to detect a minute elongation of the ball screw 40, which occurs during the mold-clamping operation.

In the following, operation of the two-platen type mold-clamping apparatus will be explained.

In a mold-closing operation, the mold-clamping motor 70 is drivingly rotated in the forward direction under the control of the control unit. With the forward rotation of the motor 70, the four ball nuts 50, respectively coupled to the motor 70 through the sprocket 63, the chain 65 and the sprockets 61, are rotated in the forward direction in synchronism with each other. As a result, the ball nuts 50 and the movable platen 30 axially immovably mounted with the ball nuts are moved toward the stationary platen 20 for the mold-closing operation. Since the movable platen 30 has the leg portion 31 slidably engaged with the rail 11 provided on the frame 10 of the injection molding machine, and further the four ball screws 40 having opposite end portions respectively supported by the platens 20, 30 are disposed in parallel to each other, with a predetermined accuracy, the movable platen 30 smoothly moves toward the stationary platen 20, with the parallel relation between these platens kept unchanged. Whereupon, a mold-touch state is reached, wherein mold halves mounted on the both platens 20, 30 are in contact with each other.

After the mold-touch state is reached, the motor 70 is further rotated forwardly for mold-clamping operation. At this time, the mold halves are brought in urged contact with each other so that the ball nuts 50 are immovable toward the stationary platen 20, a minute elongation is generated in the ball screws 40 as the ball nuts 50 are rotated with the motor rotation, with no axial movement. In response to an output from the pressure detector which is delivered when a predetermined mold-clamping force is generated, the brake device is operated. The mold-clamping force is applied uniformly to the stationary and movable platens 20, 30 and the mold, because the four ball screws 40 are disposed at equal angular intervals around the axis 100 passing through the centers of the mold mounting faces of the platens, and separated from the axis by the same distance.

Upon completion of an injection operation by means of an injection mechanism (not shown), the motor 70 is rotated in the reverse direction, to cause the ball nuts 50 to rotate in the reverse direction so that the ball nuts 50 and the movable platen 30 are moved away from the stationary platen 20 for mold-opening operation.

The present invention is not limited to the aforesaid embodiment. For instance, a servomotor may be employed as the mold-clamping motor 70 whose output torque is controlled in an open-loop manner by a numerical control unit of the injection molding machine, to a value corresponding to the predetermined mold-clamping force. Alternatively, the output torque of the servomotor may be controlled in a feedback manner in accordance with a pressure detector output. Further, a brake mechanism may be employed in combination of the servomotor. In mounting the ball nuts on the movable platen to be rotatable but axially immovable relative thereto, means other than thrust bearing and radial bearings may be used. Further, although the power transmission mechanism comprised of the chain and the sprockets is provided in the embodiment, a combination of a timing belt and pulleys or a gear train may be used. Moreover, a plurality of motors may be used for the drive of the respective ball nuts.

## Claims

1. A two-platen mold-clamping apparatus comprising:
a stationary platen (20);
a movable platen (30) disposed for reciprocal motion relative to said stationary platen (20);
a plurality of ball nuts (50) mounted on the movable platen (30) and each disposed to be rotatable relative to said movable platen (30) but axially immovable relative thereto;
a plurality of ball screws (40) each threadedly engaged with a corresponding one of said plurality of ball nuts (50) and each having one end portion fixed to said stationary platen (20); and
at least one motor (70) having an output shaft (71) and mounted on said movable platen (30);
characterised by:
means (60) for operatively coupling said output shaft (71) of said at least one motor (70) to said plurality of the ball nuts (50), whereby said plurality of ball screws (40) are caused to be elongated, during a mold-clamping operation, so as to generate a mold-clamping force; and
a frame (10) upon which is fixed the stationary platen (20) and a rail (11) extending parallel to the ball screws (40), the movable platen (30) being slidably engaged with the rail (11) in a manner such that it is prevented from being disengaged from the rail (11).

2. A two-platen mold-clamping apparatus according to claim 1, wherein each of said ball nuts (50) has an extension portion (51) formed integrally therewith and projecting in a direction away from said stationary platen (20) with respect to said movable platen (30), and said coupling means (60) operatively couples said extension portion (51) with said output shaft (71) of said motor (70).

3. A two-platen mold-clamping apparatus according to claim 1 or 2, wherein said plurality of ball screws (40) are circumferentially disposed at equal angular intervals around an axis passing through centres of mold-mounting-faces of said stationary and movable platens (20,30), and are spaced from said axis by the same distance, respectively.

4. A two-platen mold-clamping apparatus according to any preceding claim, when installed in an injection molding machine.

## Patentansprüche

1. Formschließvorrichtung mit zwei Traversen, die umfaßt:
eine stationäre Traverse (20);
eine bewegbare Traverse (30), die zur Hin- und Herbewegung bezüglich der stationären Traverse (20) eingerichtet ist;
eine Vielzahl von Muttern (50), die auf der bewegbaren Traverse befestigt sind und so angeordnet sind, daß sie relativ zur bewegbaren Traverse (30) drehbar aber axial dazu unbewegbar sind;
eine vielzahl von Gewindewellen (40), von denen jede über ein Gewinde mit einer entsprechenden (50) aus der Vielzahl der Muttern (50) in Eingriff steht und von denen jede einen Endteil hat, der an der stationären Traverse (20) befestigt ist; und
wenigstens einen Motor (70), der eine Abgabewelle (71) hat und der auf der bewegbaren Traverse (30) befestigt ist;
**gekennzeichnet durch**
Mittel (60) zur betriebsmäßigen Kopplung der Abgabewelle (71) des wenigstens einen Motors (70) mit der Vielzahl der Muttern, wodurch bewirkt wird, daS die Vielzahl der Gewindewellen sich während der Formschließarbeit längen, um so eine Formschließkraft zu erzeugen; und
einen Rahmen (10), auf dem die stationäre Traverse befestigt ist (20) und eine Schiene (11), die sich parallel zu den Gewindewellen (40) erstreckt, wobei die bewegbare Traverse (30) gleitend mit der Schiene (11) in einer Weise in Eingriff steht, daS es verhindert wird, daß sie von der Schiene (11) gelöst wird.

2. Formschließvorrichtung mit zwei Traversen nach Anspruch 1, bei der jeder der Kugelmuttern (50) einen Ausdehnungsteil (51) aufweist, der einstückig damit gebildet ist und in einer Richtung weg von der stationären Traverse (20) in Bezug auf die bewegbare Traverse (30) hervorspringt, und wobei die Koppelmittel (60) im Betrieb den Ausdehnungsteil (51) mit der Abgabewelle (71) des Motors (70) koppeln.

3. Formschließvorrichtung mit zwei Traversen nach Anspruch 1 oder 2, bei der die Vielzahl der Gewindewellen (40) jeweils in gleichmäßigen Winkelintervallen rund um eine Achse eingerichtet sind, die durch die Zentren der Formbefestigungsflächen der stationären und der bewegbaren Traverse (20, 30) laufen und von der Achse durch die gleiche Entfernung beabstandet sind.

4. Formschließvorrichtung mit zwei Trauersen nach einem der vorhergehenden Ansprüche, die in einer Einspritzformgebungsmaschine installiert ist.

## Revendications

1. Un appareil de serrage de moule à deux plateaux, comprenant :
un plateau fixe (20) ;
un plateau mobile (30) placé pour se déplacer en va-et-vient par rapport audit plateau fixe (20) ;
un ensemble d'écrous à billes (50) montés sur le plateau mobile (30) et disposés chacun pour tourner par rapport audit plateau mobile (30) mais immobiles axialement par rapport à ce dernier ;
un ensemble de vis à billes (40) vissées chacune dans un écrou à billes correspondant dudit ensemble d'écrous à billes (50) et présentant chacune une partie d'extrémité fixée audit plateau mobile (20) ; et
au moins un moteur (70) présentant un arbre de sortie (71) et monté sur ledit plateau mobile (30) ;
caractérisé par :
des moyens (60) pour coupler de manière opérationnelle ledit arbre de sortie (71) d'au moins ce moteur (70) audit ensemble d'écrous à billes (50), de sorte que ledit ensemble d'écrous à billes (40) est amené à s'allonger, au cours d'une opération de serrage de moule, de manière à générer une force de serrage de moule ; et
un bâti (10) sur lequel est fixé le plateau fixe (20) et un rail (11) s'étendant parallèlement aux vis à billes (40), la platine mobile (30) étant engagée à coulissement avec le rail (11) de manière telle qu'elle soit empêchée d'être dégagée du rail (11).

2. Un appareil de serrage de moule à deux plateaux selon la revendication 1, dans lequel chacune desdites vis à billes (50) présente une partie de prolongement (51) formée de manière solidaire avec elle et faisant saillie dans une direction écartée dudit plateau fixe (20) par rapport audit plateau mobile (30), lesdits moyens de couplage (60) reliant de manière opérationnelle ladite partie de prolongement (51) avec ledit arbre de sortie (71) dudit moteur (70).

3. Un appareil de serrage de moule à deux plateaux selon la revendication 1 ou 2, dans lequel ledit ensemble de vis à billes (40) est disposé de manière circonférentielle à des intervalles angulaires égaux autour d'un axe passant par les centres des faces de montage de moule desdits plateaux fixe et mobile (20, 30), et est écarté respectivement dudit axe de la même distance.

4. Un appareil de serrage de moule à deux plateaux selon une revendication précédente quelconque lorqu'il est monté dans une machine de moulage par injection.
